# EUROPÄISCHE PATENTSCHRIFT

(11) **EP 2 143 960 B1**
(45) Veröffentlichungstag und Bekanntmachung des Hinweises auf die Patenterteilung: **18.06.2014**
(21) Anmeldenummer: 09008722.2
(22) Anmeldetag: 03.07.2009
(51) Int. Cl.: F16B 7/04, F16M 11/06, G02B 23/16, F16L 21/06, F16D 3/72, G02B 7/182

(54) **Vorrichtung zur Halterung eines Lagersystems**
Device for holding a bearing system
Dispositif pour maintenir un système de palier

(30) Priorität: 08.07.2008 DE 102008031910
(43) Veröffentlichungstag der Anmeldung: 13.01.2010
(73) Patentinhaber: Astrium GmbH, 82024 Taufkirchen (DE)
(72) Erfinder: Weimer, Peter, 88677 Markdorf (DE)
(74) Vertreter: Hummel, Adam

(56) Entgegenhaltungen:
- WO-A1-03/011678
- DE-A1- 2 703 772
- DE-A1- 3 931 275
- DE-A1- 10 325 441
- DE-A1- 19 812 223
- DE-A1-102007 004 335
- DE-B- 1 286 831
- DE-B3- 10 346 053
- FR-A- 1 338 285
- US-A- 4 997 123

## Beschreibung

Die Erfindung betrifft die einer Kombination Vorrichtung und eines temporär, kraftfrei haltbaren Lagersystems mit einer Drehachse, das eine zylindrische Hohlachse und eine mit der Hohlachse gekoppelte Lagerschale umfasst.

Hochempfindliche optische oder elektrische Scan-Systeme, wie z.B. Teleskope, erfordern spielfreie Lagersysteme, welche einen Antriebsmechanismus des Scan-Systems möglichst wenig beeinflussen sollen. Dies bedeutet, dass das Lagersystem möglichst geringe Gegendrehmomente erzeugen darf. Ein (absolut) spielfreies Lagersystem, insbesondere über große Temperaturdifferenzen, wird bspw. durch stark vorgespannte Lagersysteme erreicht, welche hohe Antriebsmomente erfordern.

Für Schwenkbewegungen in einem Winkelbereich von ca. +/- 25° haben sich sog. Flexpivot-Lagerungen etabliert, welche über eine elastische Verformung integrierter Flachfederelemente ihre Drehachse sehr genau einhalten. Flexpivot-Lager weisen darüber hinaus den Vorteil auf, dass zwischen den sich drehenden Teilen des Lagersystems keine Reibung auftritt. Allerdings sind Flexpivot-Lager jedoch bei optimaler kinematischer Auslegung unter Schwerelosigkeit gegenüber lateralen und axialen Kräften sehr empfindlich. Solche Kräfte treten in der Regel beim Start einer Rakete auf, mit welcher das Scan-System in einen Orbit verbracht wird.

Um die Lager der Scan-Systeme zu entlasten, werden sog. "Hold Down and Release"-Mechanismen (HDRM) angebracht. Diese Mechanismen stellen einen Halte- und Freigabemechanismus dar, der beim Start einer Rakete geschlossen ist und im Orbit geöffnet wird, so dass ein bestimmungsgemäßer Betrieb des Scan-Systems erfolgen kann. Problematisch bei den HDRM's ist häufig, dass eine minimale Überbestimmung vorliegt. In deren Folge ist eine Verformung der Flexpivot-Lager nicht vollständig auszuschließen, wodurch die Funktionsfähigkeit des Flexpivot-Lagers beeinträchtigt sein kann.

Aus der WO 03/011678 A1 ist eine Vorrichtung zur Transportsicherung eines flexiblen Entkoppelungselements bekannt. Die Vorrichtung besteht aus einem den Umfang des Entkoppelungselements umschließenden, im Wesentlichen durch zwei Halbschalen gebildeten, rohrförmigen Gehäuse, das aufklappbar über ein längs verlaufendes Scharnier ausgebildet ist. Dieses ist durch ein Spannmittel fest zusammenspannbar, wobei stirnseitige Flansche mit Öffnungen zum Durchtritt des zu schützenden Entkoppelungselements vorgesehen sind. Das Gehäuse ist durch eine Mehrzahl an Längsstäben gebildet, die um den Umfang des Entkoppelungselements gleichmäßig verteilt angeordnet sind, wobei die Enden mechanisch mit den Flanschen zum Umschließen des Entkoppelungselements gekoppelt sind.

Es ist daher Aufgabe der vorliegenden Erfindung, eine Vorrichtung und ein temporär kraftfreiers Lagersystem mit einer Drehachse derart zu kombinieren, dass auf einfache Weise eine Überbestimmung der Halterung vermieden werden kann. Ferner soll die Vorrichtung auf einfache Weise eine Entriegelung zur Freigabe des Lagersystems ermöglichen.

Diese Aufgaben werden gelöst durch eine Vorrichtung gemäß den Merkmalen des Patentanspruches 1. Vorteilhafte Ausgestaltungen ergeben sich aus den abhängigen Patentansprüchen.

Eine erfindungsgemäße Kombination umfasst nach einem Ausfürungsbeispiel ein temporär, kraftfrei haltbares Lagersystem mit einer Drehachse, sowie eine zylindrische Hohlachse und eine mit der Hohlachse gekoppelte Lagerschale. Die zylindrische Hohlachse ist aus zwei Teilachsen gebildet, welche über das Lasersystem miteinander verbunden sind und das Lagersystem aufnehmen und haltern. Die Mittel- oder Symmetrieachse der zylindrischen Hohlachse fällt dabei mit der Drehachse des Lagersystems zusammen, wenn dieses von der zylindrischen Hohlachse aufgenommen und gehaltert ist. Die Lagerschale umschließt die Hohlachse in Umfangsrichtung, welche mittels einer Halte- und Freigabevorrichtung derart an der Hohlachse befestigbar ist, dass alle an der Vorrichtung anliegenden lateralen und axialen Kräfte über die zylindrische Hohlachse in Achsaufnahmen leitbar sind, ohne dass das Lagersystem mit einer Last beaufschlagt wird.

Die Anordnung des Lagersystems in der zylindrischen Hohlachse, welche mit einer durch die Halte- und Freigabevorrichtung gesteuerten Lagerschale verbunden ist, ermöglicht die Bereitstellung einer Vorrichtung, welche keine Überbestimmung zu dem Lagersystem aufweist. Darüber hinaus kann die Vorrichtung bei minimalstem Baugruppengewicht mit kompakten Abmaßen realisiert werden. Insbesondere ermöglicht es die erfindungsgemäße Kombination, das Lagersystem geringstmöglich zu dimensionieren, da dieses lediglich auf Orbitlasten ausgelegt zu werden braucht und damit nur geringe Drehmomente aufbauen kann. Die Stabilität während der Lagerung des Lagersystems und insbesondere während eines Raketenstarts wird hingegen durch die Vorrichtung und insbesondere durch die zylindrische Hohlachse bereitgestellt. Ein weiterer Vorteil der Erfindung besteht darin, dass diese mehrfach verwendet bzw. eingesetzt werden kann.

Dadurch, dass die Lagerschale die Hohlachse in Umfangsrichtung umschließt, ist eine gleichmäßige Aufnahme der lateralen und axialen Kräfte über die zylindrische Hohlachse gewährleistet ist.

Die Hohlachse ist erfindungsgemäß aus zwei, insbesondere symmetrisch zueinander angeordneten, Teilachsen gebildet, welche über das Lagersystem miteinander verbunden sind. Die an der Vorrichtung anliegenden lateralen und axialen Kräfte werden über die zwei Teilachsen in Achsaufnahmen geleitet, wobei das Lagersystem von diesen Kräften entkoppelt ist, solange die Halte- und Freigabevorrichtung verriegelt ist. Zur Befestigung und Halterung des Lagersystems weist jede der Teilachsen in einer Ausgestaltung an ihren einander zugewandten Enden einen Flansch mit einer Bohrung auf. Es ist vorgesehen, das Lagersystem mit den Flanschen der Teilachsen zu verbinden. Die Verbindung des Lagersystems mit der Hohlachse bzw. mit den beiden Teilachsen erfolgt zweckmäßigerweise durch einen Stoffschluss. Insbesondere kann der Stoffschluss mit Hilfe einer Elektro-Plasmaschweißanlage nachträglich und entlang des gesamten Umfangs des Lagersystems vorgenommen werden.

Gemäß einer weiteren zweckmäßigen Ausgestaltung weisen die Teilachsen an ihren einander zugewandten Enden auf ihrer Außenseite jeweils eine Nut auf, in die die Lagerschale formschlüssig eingreift. Die Nut verläuft hierbei insbesondere längs eines Außenumfangs der Teilachse. Zweckmäßigerweise sind die jeweiligen Nuten durchlaufend, d.h. umlaufend, ausgebildet.

Die Lagerschale umfasst insbesondere ein erstes und ein zweites Lagerschalenteil, welche an ihrem ersten Ende drehbar miteinander verbunden sind und welche an ihrem zweiten gegenüberliegenden Ende mit der Halte- und Freigabevorrichtung mit hoher Vorspannung miteinander verbunden sind. Durch die zweiteilige Ausgestaltung der Lagerschale kann einerseits eine einfache und feste Verbin-dung zu der Hohlachse erfolgen. Andererseits kann durch Öffnen der zwei Lagerschalenteile eine Krafteinwirkung auf die Hohlachse unterbunden werden, so dass das Lagersystem bestimmungsgemäß verwendet werden kann. Die Verbindung der zwei Lagerschalenteile an ihrem ersten Ende und deren Fixierung unter Aufbringung einer hohen Vorspannung mittels der Halte- und Freigabevorrichtung ermöglicht einen konstruktiv einfachen Aufbau und die zuverlässige Bereitstellung eines nicht überbestimmten Haltemechanismus für das Lagersystem. Die hohe Vorspannung an den zweiten Enden ermöglicht ein automatisches "Öffnen" der Lagerschale, sobald die Halte- und Freigabevorrichtung eine Kraft zum Zusammendrücken der zweiten Enden nicht mehr aufbringt.

Vorteilhafterweise ist zusätzlich zwischen den zweiten Enden der Lagerschalenteile ein Federelement vorgesehen, welches bei Ansteuerung der Halte- und Freigabevorrichtung zum Entriegeln der erfindungsgemäßen Vorrichtung das definierte Öffnen der Lagerschalenteile bewirkt.

Gemäß einer weiteren Ausgestaltung umfasst die Halte- und Freigabevorrichtung einen Bolzentrennmechanismus. Dieser kann bspw. in Gestalt eines bekannten Frangibolt-Mechanismus ausgebildet sein, welcher bei entsprechender Ansteuerung die mechanische Verbindung der zweiten Enden der Lagerschalenteile löst und deren Krafteinwirkung auf die Hohlachse damit beendet.

Zur Aufnahme der bei einem Raketenstart auftretenden Kräfte ist die Hohlachse insbesondere aus einem hochsteifen Material wie z.B. Titan gebildet. Wie bereits erläutert ist es dadurch möglich, das Lagersystem lediglich auf Orbitlasten zu dimensionieren, welches somit nur geringe Drehmomente aufbaut, wie dies für hochpräzise Scan-Elemente erforderlich ist. In entsprechender Weise ist die Lagerschale aus dem gleichen hochfesten Material (Titan) gebildet.

Es ist weiterhin vorgesehen, dass die Hohlachse in einer Aufspannung gefertigt ist.

Als Lagersystem wird bei einer erfindungsgemäßen Kombination zweckmäßigerweise ein spannungsfreies Flexpivot-Lager verwendet, welche über eine elastische Verformung integrierter Flachfederelemente ihre Drehachse sehr genau einhalten, ohne dass hierbei eine Reibung zwischen den sich drehenden Teilen entsteht. Derartige Flexpivot-Lager sind aus dem Stand der Technik bekannt.

Die Erfindung wird nachfolgend näher anhand eines Ausführungsbeispiels in den Figuren erläutert. Es zeigen:
- Figur 1: eine Querschnittsdarstellung einer erfindungsgemäßen Vorrichtung,
- Figur 2: einen Schnitt durch eine in Figur 1 dargestellte Halte- und Freigabevorrichtung,
- Figur 3: eine Draufsicht auf die erfindungsgemäße Vorrichtung von oben,
- Figur 4: eine perspektivische Darstellung der erfindungsgemäßen Vorrichtung, bei der eine kraftfreie Lagerung des Lagersystems gegeben ist, und
- Figur 5: eine perspektivische, auseinandergezogene Darstellung der erfindungsgemäßen Vorrichtung.

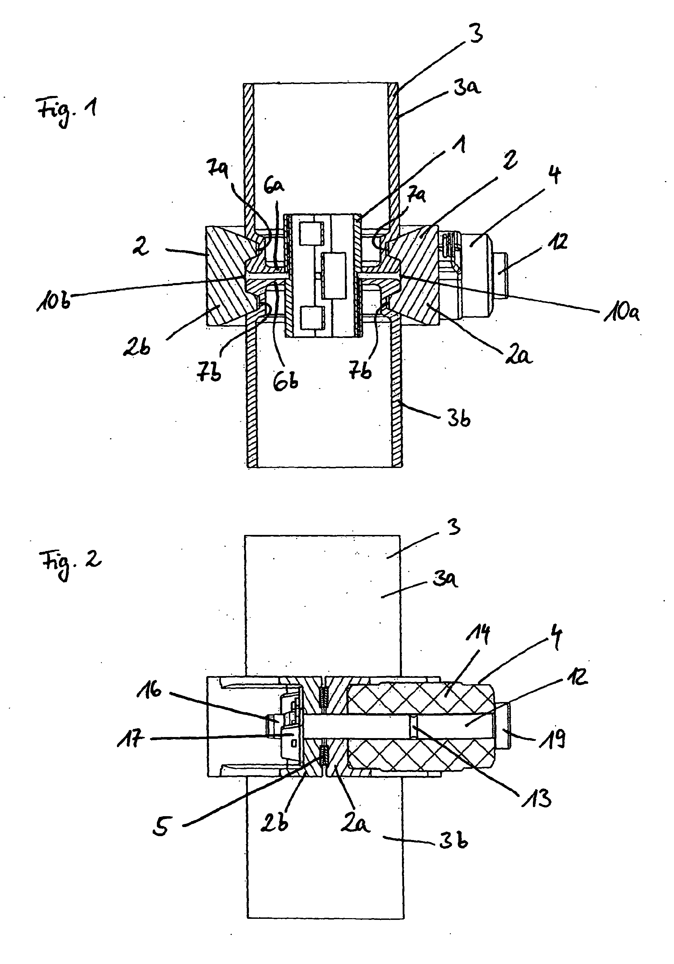

Zum Schutz eines als Flexpivot-Lager ausgebildeten Lagersystems 1 vor lateralen und axialen Kräften, wie z.B. bei einem Raketenstart, umfasst eine erfindungsgemäße Kombination eine Vorrichtung mit einer aus zwei Teilachsen 3a, 3b gebildeten Hohlachse 3. Die Hohlachse 3 bildet eine Lagerachse aus. Die Teilachsen 3a, 3b sind, wie aus Fig. 1 hervorgeht, symmetrisch zueinander angeordnet und in einer Aufspannung gefertigt. Die Hohlachse 3 bzw. deren Teilachsen 3a, 3b sind vorzugsweise aus einem hochsteifen Material (z.B. Titan) gebildet.

An ihren zueinander gewandten Enden weisen die Teilachsen 3a, 3b einen Flansch 6a, 6b mit einer Bohrung zur Aufnahme und Halterung des Flexpivot-Lagers 1 auf. Das Flexpivot-Lager 1 wird in die Bohrungen der Flansche 6a, 6b eingesteckt und bspw. mit Hilfe einer Elektro-Plasmaschweißanlage beidseitig und rundum verschweißt. Das Flexpivot-Lager 1 kommt dabei derart in der Hohlachse 3 zum Liegen, dass eine Drehachse des Flexpivot-Lagers mit einer Symmetrieachse der Hohlachse 3 zum Liegen kommt. Ferner erfolgt die Anordnung derart, dass bei entriegelter Vorrichtung eine Verdrehung der zwei gegeneinander vorgespannten Teilabschnitte des Flexpivot-Lagers 1 möglich ist.

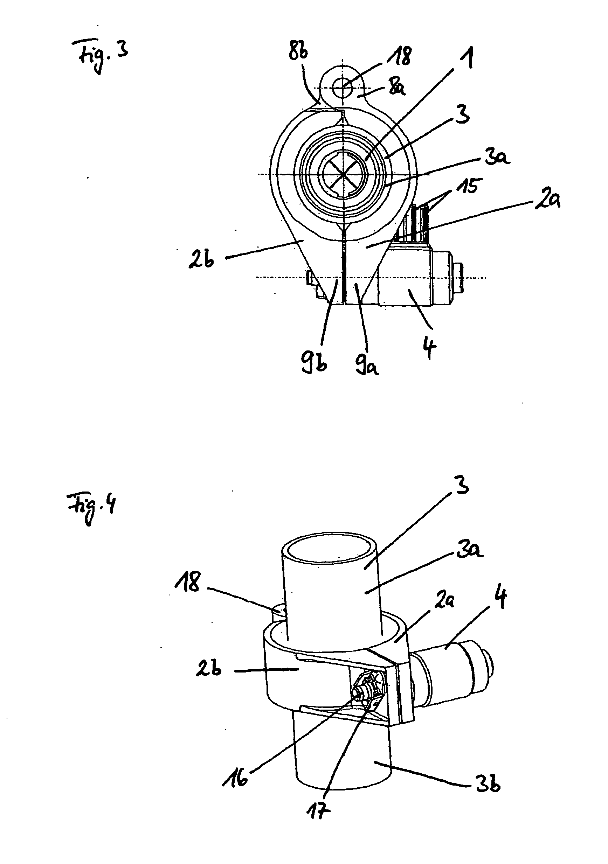

Zur Fixierung der Teilachsen 3a, 3b der Hohlachse 3 und zur gezielten Lenkung aller anliegenden lateralen und axialen Kräfte direkt über die Hohlachse 3 in eine strukturseitige Achsaufnahme (nicht dargestellt) ist eine die Hohlachse 3 umgebende Lagerschale 2 vorgesehen. Die Lagerschale 2 umfasst 2 Lagerschalenteile 2a, 2b, welche an einem ersten Ende 8a, 8b (vgl. Figur 3) über ein Drehgelenk 18 miteinander drehbar verbunden sind. Als Material für die Lagerschalenteile 2a, 2b wird vorzugsweise ein hochfestes Material eingesetzt, wie z.B. Titan. An einem dem ersten Ende 8a, 8b gegenüberliegenden zweiten Ende 9a, 9b der Lagerschalenteile 2a, 2b ist eine als Bolzentrennmechanismus ausgebildete Halte- und Freigabevorrichtung 4 vorgesehen. Im Ausführungsbeispiel ist diese ein sog. Frangibolt-Mechanismus.

Wie aus der Querschnittsdarstellung der Figur 1 am besten zu erkennen ist, weisen die im Wesentlichen identisch ausgebildeten Lagerschalenteile 2a, 2b eine zentral verlaufende Nut 10a, 10b auf. Jede der Hohlachsen 3a, 3b weist im Bereich des Flexpivot-Lagers 1 eine Nut 7a bzw. 7b auf, welche sich längs des Umfanges der jeweiligen Teilachsen 3a, 3b erstrecken. Die Lagerschale 2 ist derart an der Hohlachse 3 angeordnet, dass die die Nut 10a, 10b ausbildenden Stege formschlüssig in die Nuten 7a, bzw. 7b der Teilachsen 3a, 3b ragen. Hierbei ragen bzw. grenzen die einander benachbart liegenden Stege der Nuten 7a bzw. 7b an den Boden der Nuten 10a, 10b der Lagerschalenteile 2a, 2b.

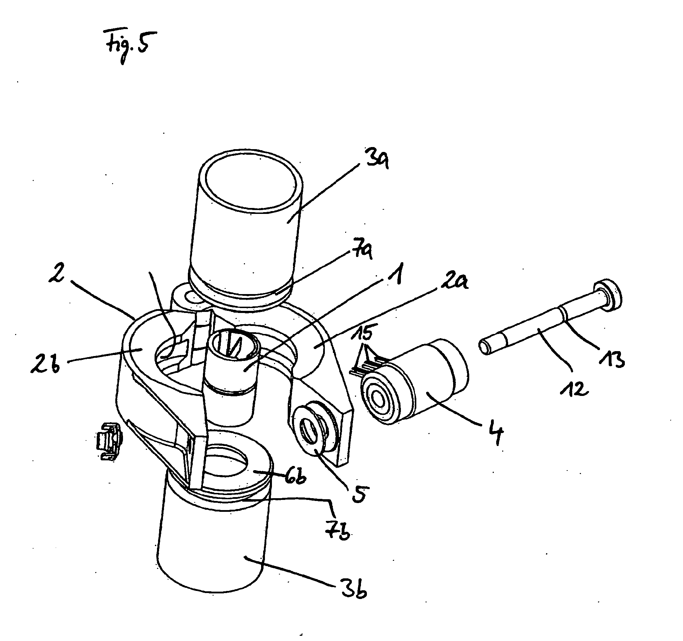

Die zweiten Enden 9a, 9b der Lagerschalenteile 2a, 2b sind über den Frangibolt-Mechanismus 4 mit hoher Vorspannung miteinander verbunden. Zwischen den zweiten Enden 9a, 9b ist ein Federelement 5 angeordnet, welches bei einer Ansteuerung des Frangibolt-Mechanismus 4 ein Öffnen der Lagerschalenteile 2a, 2b unterstützt (vgl. Figur 2 sowie Figur 5).

Solange der Frangibolt-Mechanismus geschlossen ist, werden alle anliegenden lateralen und axialen Kräfte direkt über die massiven äußeren Teilachsen 3a, 3b der Hohlachse 3 in die strukturseitigen Achsaufnahmen geleitet, ohne dass das von der Hohlachse 3 umschlossene Flexpivot-Lager einer Last ausgesetzt wird. Nach dem Öffnen des Frangibolt-Mechanismus 4 werden die Lagerschalenteile 2a, 2b über das Federelement 5 um einen definierten Weg, z.B. 0,5 bis 1,5 mm, geöffnet. Dieser Öffnungsabstand der zweiten Enden 9a, 9b der Lagerschalenteile 2a, 2b führt unmittelbar zu vollkommen freiliegenden Teilachsen 3a, 3b, wodurch alle auf die Vorrichtung wirkenden Kräfte automatisch über das im Inneren der Hohlachse 3 angeordnete Flexpivot-Lager geleitet werden. Das Flexpivot-Lager lässt nun eine Drehbewegung zu. Eine radiale oder axiale Verschiebung unter Orbitlasten wird jedoch weiterhin durch das Flexpivot-Lager verhindert.

Die Ausgestaltung des an sich bekannten Frangibolt-Mechanismus 4 kann am besten den Figuren 2 und 5 entnommen werden. Der Frangibolt-Mechanismus stellt einen Bolzentrennmechanismus dar. Zu diesem Zweck weist dieser im Inneren eines Mantels 14 einen Bolzen 12 mit einer Nut 13 auf. An einem ersten Ende weist der Bolzen 12 einen Bolzenkopf 19 auf, welcher sich an dem Mantel 14 abstützt. An seinem gegenüberliegenden Ende ist der Bolzen 12 mit einer Mutter 16 verschraubt. Zwischen der Mutter 16 und dem zweiten Ende 9b des Lagerschalenteils 2b ist ein Zwischenelement 17 zur Kraftaufnahme angeordnet. Durch die Verschraubung kann eine hohe Vorspannung auf die Lagerschalenteile 2a, 2b ausgeübt werden.

Mittels eines in den Figuren nicht dargestellten Aktuators, welcher im Inneren des Mantels 14 vorgesehen ist und an die Oberfläche des Bolzens 12 grenzt, kann ein Brechen des Bolzens an einer vordefinierten Stelle, in der Regel im Bereich der Nut 13, bewirkt werden. Aufgrund der hohen Vorspannung und mit Unterstützung des Federelementes 5 erfolgt das bereits beschriebene Öffnen der Lagerschale 2 zur Freigabe des Flexpivot-Lagers. Der Aktuator kann z.B. durch ein Heizelement gebildet sein, das über Anschlussleitungen 15 beheizt werden kann. Die Anschlussleitungen 15 zum Ansteuern des Aktuators können bspw. den Figuren 3 und 5 entnommen werden.

### Die Erfindung weist folgende Vorteile auf:

Die Vorrichtung, umfassend die Hohlachse, die Lagerschale und die Halte- und Freigabevorrichtung, weist keine Überbestimmung zu dem im Inneren der Hohlachse angeordneten Flexpivot-Lager auf.

Durch die Dimensionierung und Materialwahl der Hohlachse kann das Flexpivot-Lager kleinstmöglich dimensioniert werden, da dieses lediglich auf Orbitlasten dimensioniert werden braucht und somit nur geringe Gegendrehmomente aufweist. Es ist zweckmäßig, für die Hohlachse ein hochsteifes Material, wie z. B. Titan, zu verwenden. Die erfindungsgemäße Vorrichtung weist dann eine kleine Baugröße bei minimalstem Baugruppengewicht auf.

Als Halte- und Freigabevorrichtung können qualifizierte Bolzentrennmechanismen verwendet werden, wie z.B. der erläuterte Frangibolt-Mechanismus. Hierbei braucht der Aktivierungsbolzen nicht, wie meist erforderlich, vollständig gezogen und aufgefangen werden, da ein geringer Aktivierungsweg (Öffnungsabstand) im Bereich von 0,5 bis 1,0 mm ausreichend ist.

Es ist möglich, die Schockbelastung auf ein Space Craft bei Aktivierung der Vorrichtung zu minimieren.

Die Vorrichtung kann mehrfach verwendet bzw. eingesetzt werden. Die Vorrichtung kann ferner auch als sog. ,,Low Shock"-Mechanismus ausgeführt werden, z.B. durch die Verspannung der Lagerschalenteile mit Hilfe eines stark untersetzten Getriebemotors.

Die Erfindung wurde anhand eines Flexpivot-Lagers beschrieben, wobei dieser jedoch auch für andere, hochempfindliche Lagersysteme einsetzbar ist.

### Bezugszeichenliste

- 1: Flexpivot-Lager
- 2: Lagerschale
- 2a, 2b: Lagerschalenteil
- 3: Hohlachse (Lagerachse)
- 3a, 3b: Teilachse
- 4: Halte- und Freigabevorrichtung
- 5: Federelement
- 6a, 6b: Flansch
- 7a, 7b: Nut
- 8a, 8b: erstes Ende der Lagerschalenteile 2a, 2b
- 9a, 9b: zweites Ende der Lagerschaltenteile 2a, 2b
- 10a, 10b: Nut der Lagerschalenteile 2a, 2b
- 11a, 11b: Steg
- 12: Bolzen
- 13: Nut im Bolzen
- 14: Mantel der Halte- und Freigabevorrichtung
- 15: Anschlussleitung
- 16: Mutter
- 17: Zwischenelement
- 18: Drehgelenk der Lagerschale
- 19: Bolzenkopf

## Patentansprüche

1. Kombination einer Vorrichtung und eines temporär, kraftfrei haltbaren Lagersystems (1)
mit einer Drehachse, wobei die Vorrichtung eine zylindrische Hohlachse (3) und eine mit der Hohlachse (3) gekoppelte Lagerschale (2) umfasst, wobei
- die zylindrische Hohlachse (3) aus zwei Teilachsen (3a, 3b) gebildet ist, welche über das Lagersystem (1) miteinander verbunden sind und das Lagersystem (1) konzentrisch aufnehmen und haltern;
- die Lagerschale (2) die Hohlachse (3) in Umfangsrichtung umschließt, wobei die Lagerschale (2) mittels einer Halte- und Freigabevorrichtung (4) derart an der Hohlachse (3) befestigbar ist, dass bei geschlossener Halte- und Freigabevorrichtung (4) alle an der Vorrichtung anliegenden lateralen und axialen Kräfte über die zylindrische Hohlachse (3) in Achsaufnahmen leitbar sind, ohne dass das Lagersystem (1) mit einer Last beaufschlagt wird.

2. Kombination nach Anspruch 1, **dadurch gekennzeichnet, dass** die Hohlachse (3) aus zwei symmetrisch zueinander angeordneten, Teilachsen (3a, 3b) gebildet ist.

3. Kombination nach Anspruch 1 oder 2, **dadurch gekennzeichnet, dass** jede der Teilachsen (3a, 3b) an ihren einander zugewandten Enden einen Flansch (6a, 6b) mit einer Bohrung zur Aufnahme und Halterung des Lagersystems (1) aufweist.

4. Kombination nach Anspruch 3, **dadurch gekennzeichnet, dass** das Lagersystem (1) mit den Flanschen (6a, 6b) der Teilachsen (3a, 3b) verbunden ist.

5. Kombination nach einem der vorherigen Ansprüche, **dadurch gekennzeichnet, dass** die Teilachsen (3a, 3b) an ihren einander zugewandten Enden auf ihrer Außenseite jeweils eine Nut (7a, 7b) aufweisen, in die die Lagerschale (2) formschlüssig eingreift.

6. Kombination nach Anspruch 5, **dadurch gekennzeichnet, dass** die jeweiligen Nuten durchlaufend ausgebildet sind.

7. Kombination nach Anspruch 5 oder 6, **dadurch gekennzeichnet, dass** die Lagerschale ein erstes und ein zweites Lagerschalenteil (2a, 2b) umfasst, welche an ihrem ersten Ende (8) drehbar miteinander verbunden sind und welche an ihrem zweiten gegenüberliegenden Ende mit der Halte- und Freigabevorrichtung (4) mit hoher Vorspannung miteinander verbunden sind.

8. Kombination nach Anspruch 7, **dadurch gekennzeichnet, dass** zwischen den zweiten Enden der Lagerschalenteile (2a, 2b) ein Federelement (5) vorgesehen ist, welches bei Ansteuerung der Halte- und Freigabevorrichtung (4) das definierte Öffnen der Lagerschalenteile (2a, 2b) bewirkt.

9. Kombination nach einem der vorherigen Ansprüche, **dadurch gekennzeichnet, dass** das Lagersystem (1) mit der Hohlachse (3) stoffschlüssig verbunden ist.

10. Kombination nach einem der vorherigen Ansprüche, **dadurch gekennzeichnet, dass** die Halte- und Freigabevorrichtung (4) einen Bolzentrennmechanismus umfasst.

11. Kombination nach einem der vorherigen Ansprüche, **dadurch gekennzeichnet, dass** die Hohlachse (3) aus einem hochsteifen Material gebildet ist.

12. Kombination nach einem der vorherigen Ansprüche, **dadurch gekennzeichnet, dass** die Lagerschale (2) aus einem hochfesten Material gebildet ist.

13. Kombination nach einem der vorherigen Ansprüche, **dadurch gekennzeichnet, dass** die Hohlachse (3) in einer Aufspannung gefertigt ist.

14. Kombination nach einem der vorherigen Ansprüche, **dadurch gekennzeichnet, dass** das Lagersystem (1) ein spannungsfreies Flexpivotlager ist.

## Claims

1. Combination of a device and of a bearing system (1) which is temporarily holdable, free of force, and which has an axis of rotation, the device comprising a cylindrical hollow axle (3) and a bearing shell (2) coupled to the hollow axle (3),
- the cylindrical hollow axle (3) being formed from two subaxles (3a, 3b) which are connected to one another via the bearing system (1) and which receive and hold the bearing system (1) concentrically;
- the bearing shell (2) surrounding the hollow axle (3) in the circumferential direction, the bearing shell (2) being fastenable to the hollow axle (3) by means of a holding and releasing device (4), in such a way that, with the holding and releasing device (4) closed, all the lateral and axial forces prevailing at the device can be conducted into axle seatings via the cylindrical hollow axle (3), without the bearing system (1) being acted upon by a load.

2. Combination according to Claim 1, **characterized in that** the hollow axle (3) is formed from two subaxles (3a, 3b) arranged symmetrically to one another.

3. Combination according to Claim 1 or 2, **characterized in that** each of the subaxles (3a, 3b) has at its ends facing one another a flange (6a, 6b) with a bore for receiving and holding the bearing system (1).

4. Combination according to Claim 3, **characterized in that** the bearing system (1) is connected to the flanges (6a, 6b) of the subaxles (3a, 3b).

5. Combination according to one of the preceding claims, **characterized in that** the subaxles (3a, 3b) have at their ends facing one another, and their outside, in each case a groove (7a, 7b) into which the bearing shell (2) engages positively.

6. Combination according to Claim 5, **characterized in that** the respective grooves are formed continuously.

7. Combination according to Claim 5 or 6, **characterized in that** the bearing shell comprises a first and a second bearing-shell part (2a, 2b) which are connected rotatably to one another at their first end (8) and which are connected to one another with high prestress at their second, opposite end by means of the holding and releasing device (4).

8. Combination according to Claim 7, **characterized in that** a spring element (5) is provided between the second ends of the bearing-shell parts (2a, 2b) and brings about the defined opening of the bearing-shell parts (2a, 2b) when the holding and releasing device (4) is activated.

9. Combination according to one of the preceding claims, **characterized in that** the bearing system (1) is connected to the hollow axle (3) in a materially integral manner.

10. Combination according to one of the preceding claims, **characterized in that** the holding and releasing device (4) comprises a bolt separation mechanism.

11. Combination according to one of the preceding claims, **characterized in that** the hollow axle (3) is formed from a highly rigid material.

12. Combination according to one of the preceding claims, **characterized in that** the bearing shell (2) is formed from a high-strength material.

13. Combination according to one of the preceding claims, **characterized in that** the hollow axle (3) is manufactured in a chucking fixture.

14. Combination according to one of the preceding claims, **characterized in that** the bearing system (1) is a tension-free flexible pivot bearing.

## Revendications

1. Combinaison d'un dispositif et d'un système de palier (1) pouvant être maintenu temporairement sans force avec un axe de rotation, la coque de palier (2) comprenant un axe creux (3) cylindrique et une coque de palier (2) couplée à l'axe creux (3) ;
- l'axe creux (3) cylindrique se composant de deux axes partiels (3a, 3b) reliés entre eux via le système de palier (1) et logeant et maintenant concentriquement le système de palier (1) ;
- la coque de palier (2) entoure l'axe creux (3) dans la direction périphérique, la coque de palier (2) étant fixée de telle sorte à l'axe creux (3) au moyen d'un dispositif de maintien et de libération (4) qu'en présence du dispositif de maintien et de libération (4) fermé, toutes les forces latérales et axiales s'exerçant au niveau du dispositif peuvent être guidées dans les logements axiaux via l'axe creux (3) cylindrique, sans que le système de palier (1) soit chargé par une charge.

2. Combinaison selon la revendication 1, **caractérisée en ce que** l'axe creux (3) se compose de deux axes partiels (3a, 3b) disposés symétriquement l'un par rapport à l'autre.

3. Combinaison selon la revendication 1 ou 2, **caractérisée en ce que** chacun des axes partiels (3a, 3b) comporte au niveau de ses extrémités orientées l'une vers l'autre une bride (6a, 6b) dotée d'un alésage destiné à recevoir et à maintenir le système de palier (1).

4. Combinaison selon la revendication 3, **caractérisée en ce que** le système de palier (1) est relié aux brides (6a, 6b) des axes partiels (3a, 3b).

5. Combinaison selon l'une quelconque des revendications précédentes, **caractérisée en ce que** les axes partiels (3a, 3b) comportent respectivement, au niveau de leurs extrémités orientées l'une vers l'autre, sur leur côté extérieur, une encoche (7a, 7b) dans laquelle la coque de palier (2) s'imbrique par complémentarité de formes.

6. Combinaison selon la revendication 5, **caractérisée en ce que** les encoches respectives sont réalisées de façon traversante.

7. Combinaison selon la revendication 5 ou 6, **caractérisée en ce que** la coque de palier comprend une première et une deuxième partie de coque de palier (2a, 2b) reliées entre elles de façon à pouvoir pivoter au niveau de leur première extrémité (8) et reliées entre elles avec une précontrainte élevée au niveau de leur deuxième extrémité opposée, avec le dispositif de maintien et de libération (4).

8. Combinaison selon la revendication 7, **caractérisée en ce qu'**un élément de ressort (5) est prévu entre les deuxièmes extrémités des parties de coque de palier (2a, 2b), ledit élément provoquant l'ouverture définie des parties de coque de palier (2a, 2b) en cas d'excitation du dispositif de maintien et de libération (4).

9. Combinaison selon l'une quelconque des revendications précédentes, **caractérisée en ce que** le système de palier (1) est relié par complémentarité de matières à l'axe creux (3).

10. Combinaison selon l'une quelconque des revendications précédentes, **caractérisée en ce que** le dispositif de maintien et de libération (4) comprend un mécanisme de séparation de boulon.

11. Combinaison selon l'une quelconque des revendications précédentes, **caractérisée en ce que** l'axe creux (3) se compose d'une matière hautement rigide.

12. Combinaison selon l'une quelconque des revendications précédentes, **caractérisée en ce que** la coque de palier (2) se compose d'une matière fortement résistante.

13. Combinaison selon l'une quelconque des revendications précédentes, **caractérisée en ce que** l'axe creux (3) est fabriqué en un seul serrage.

14. Combinaison selon l'une quelconque des revendications précédentes, **caractérisée en ce que** le système de palier (1) est un palier à pivot flexible sans tension.
